# EUROPEAN PATENT SPECIFICATION

(11) **EP 4 401 279 B1**
(45) Date of publication and mention of the grant of the patent: **26.11.2025**
(21) Application number: 24150918.1
(22) Date of filing: 09.01.2024
(51) Int. Cl.: H02J 7/34, H02M 1/00, H02M 3/335

(54) **POWER CONVERSION CIRCUIT AND CONTROL METHOD THEREOF, BATTERY PACK, AND ENERGY STORAGE SYSTEM**
LEISTUNGSUMWANDLUNGSSCHALTUNG UND STEUERUNGSVERFAHREN DAFÜR, BATTERIEPACK UND ENERGIESPEICHERSYSTEM
CIRCUIT DE CONVERSION DE PUISSANCE ET SON PROCÉDÉ DE COMMANDE, BLOC-BATTERIE ET SYSTÈME DE STOCKAGE D'ÉNERGIE

(30) Priority: 16.01.2023 CN 202310104820; 21.04.2023 CN 202310456121
(43) Date of publication of application: 17.07.2024
(73) Proprietor: Huawei Digital Power Technologies Co., Ltd., Shenzhen, Guangdong 518043 (CN)
(72) Inventor: YANG, Siwei, Shenzhen, Guangdong 518043 (CN); GUO, Haibin, Shenzhen, Guangdong 518043 (CN); ZHONG, Shaohui, Shenzhen, Guangdong 518043 (CN); MENG, Yuandong, Shenzhen, Guangdong 518043 (CN)
(74) Representative: Maiwald GmbH

(56) References cited:
- WO-A1-2022/207571
- CN-A- 115 189 568
- US-A1- 2015 194 905
- US-A1- 2022 041 075

## Description

### TECHNICAL FIELD

This application relates to the field of electronic technologies, and in particular, to a power conversion circuit and a control method thereof, a battery pack, and an energy storage system.

### BACKGROUND

An energy storage system is a device used to store energy, and may be applied to the field of photovoltaic power generation. For example, the energy storage system can receive, through a power supply circuit, an input voltage provided by a power generation device such as a photovoltaic panel, process the input voltage, and then provide an output voltage to an energy storage device such as a battery. The battery stores electric energy provided by the output voltage. The energy storage system may also supply power to another electrical device by using the electric energy stored in the energy storage system.

In the conventional technology, when a power generation device is affected by an external condition, a voltage value of an input voltage provided to an energy storage system is unstable. For the energy storage system, when different input voltages are received, the power supply circuit may adjust, by adjusting a turn-on frequency and a turn-off frequency of a switching transistor, a voltage value of an output voltage provided by the power supply circuit for the battery, so as to ensure stable and reliable energy transfer.

For example, the energy storage converter system includes a DC/DC conversion circuit that boosts a battery voltage to a normal operating voltage range and an inverter circuit that converts a direct current output by the DC/DC conversion circuit into an alternating current. To adapt to a requirement of a wide voltage operating range of an inverter, a range of a boost ratio of the DC/DC conversion circuit is relatively wide, and system efficiency is relatively reduced when the boost ratio is very high. In this case, a series/parallel connection manner between a plurality of DC/DC conversion circuits needs to be switched. Generally, output capacitors are connected in parallel at two ends of the DC/DC conversion circuit to stabilize voltages at two ends of the DC/DC conversion circuit. When a series/parallel connection operating mode of the DC/DC conversion circuit is directly switched, a sudden voltage change occurs on the output capacitor, thereby generating a high current, which easily causes contact adhesion of a switching switch. In addition, current impact caused by the sudden voltage change may easily damage a component or a load connected to the DC/DC conversion circuit.

US 2022/041075 A1 describes a vehicle-side charging device.

US 2015/194905 A1 describes an universal AC to DC converter.

WO 2022/207571 A1 describes a title isolated voltage converter.

CN 115 189 568 A describes a switching method of series-parallel connection on the primary side of a two-level three-level DC-DC converter.

### SUMMARY

This application provides a power conversion circuit and a control method, to resolve a problem that a voltage of a capacitor may suddenly change due to series/parallel connection of a direct current output circuit, so as to ensure safe switching, improve electric energy conversion efficiency of a system, and reduce costs because no circuit component needs to be added.

The present invention is defined by the subject-matter of the independent claims. Additional features of the invention are presented in the dependent claims.

According to a first aspect, an embodiment of this application provides a power conversion circuit according to claim 1. The power conversion circuit changes a voltage of a second port of the first-level DC/DC conversion circuit by switching the series/parallel connection manner between the plurality of second-level DC/DC conversion circuits, so as to change a boost ratio of the first-level DC/DC conversion circuit, improve electric energy conversion efficiency of a system, and avoid damage to a switch or a component connected to the switch due to a sudden voltage change of the first capacitor and the second capacitor when the series/parallel connection manner between the plurality of second-level DC/DC conversion circuits is switched, thereby ensuring safe switching.

In a possible implementation, the controller is further configured to: when the voltage of the battery is less than the first voltage threshold or when the voltage of the battery is greater than the second voltage threshold, adjust a PWM signal of the first-level DC/DC conversion circuit to reduce voltage values of the first capacitor and the second capacitor to be less than the third voltage threshold. According to the power conversion circuit provided in this application, control logic for adjusting the voltage values of the first capacitor and the second capacitor is simple, and no circuit component needs to be added, thereby reducing costs and shortening a switching time.

In a possible implementation, the controller is configured to control, before the controller adjusts the PWM signal of the first-level DC/DC conversion circuit, each second-level DC/DC conversion circuit to stop operating.

In a possible implementation, the controller is further configured to: after adjusting the PWM signal of the first-level DC/DC conversion circuit to reduce the voltage values of the first capacitor and the second capacitor to be less than the third voltage threshold, control the first-level DC/DC conversion circuit to stop operating, so as to ensure that the entire circuit stops operating when the series/parallel connection manner between the plurality of second-level DC/DC conversion circuits is switched, thereby ensuring safe switching.

In a possible implementation, the controller is further configured to: after the first-level DC/DC conversion circuit stops operating, control the switching module to be turned off or turned on, so that the plurality of second-level DC/DC conversion circuits are connected in series or in parallel, a time of the entire switching process is short, and the entire loop stops operating during switching, thereby ensuring safe switching.

In a possible implementation, when the battery is in a charging state, the first-level DC/DC conversion circuit is configured to reduce a voltage of a first port of the first-level DC/DC conversion circuit, and the second-level DC/DC conversion circuit is configured to reduce a voltage of a first port of the second-level DC/DC conversion circuit to a charging voltage required by the battery, so as to charge the battery. When the battery is in a discharging state, the second-level DC/DC conversion circuit is configured to boost a voltage of a second port of the second-level DC/DC conversion circuit, and the first-level DC/DC conversion circuit is configured to boost a voltage of a second port of the first-level DC/DC conversion circuit and output the boosted voltage to an external device through the first port of the first-level DC/DC conversion circuit. The power conversion circuit may be applied to both a battery charging scenario and a battery discharging scenario, to implement bidirectional conversion of electric energy. The power conversion circuit may be used in a wide range of scenarios, thereby improving application flexibility of the power conversion circuit.

According to the invention, the power conversion circuit further includes a detection circuit. The detection circuit is configured to detect a voltage value of the battery and voltage values of the first capacitor and the second capacitor, to accurately detect a charging/discharging voltage of the battery, and accordingly change a series/parallel connection manner between the plurality of second-level DC/DC conversion circuits, so as to change the voltage of the second port of the first-level DC/DC conversion circuit, change a boost ratio on both sides of the first-level DC/DC conversion circuit, and improve electric energy conversion efficiency of the system. The power conversion circuit accurately detects the voltages of the first capacitor and the second capacitor, to ensure that the voltages of the first capacitor and the second capacitor are less than the third voltage threshold during series/parallel switching and are reduced to be less than a safe operating voltage, thereby preventing a component from being damaged due to a high current generated by a sudden voltage change, and ensuring safe switching.

Composition of the switching module is not specifically limited in this embodiment of this application. For example, the switching module may include a relay, a MOS transistor, or an IGBT .

In a possible implementation, the switching module includes a relay. The relay includes a plurality of contacts, and the plurality of contacts are connected to corresponding ports on the plurality of second-level DC/DC conversion circuits. A series/parallel connection manner between the plurality of second-level DC/DC conversion circuits is switched by switching connections between the relay and different ports. Control logic is simple, and a circuit architecture is simple, and no circuit component needs to be added, thereby reducing costs.

In a possible implementation, the switching module includes a plurality of MOS transistors. The plurality of MOS transistors are connected to corresponding ports on the plurality of second-level DC/DC conversion circuits, and the series/parallel connection manner between the plurality of second-level DC/DC conversion circuits is switched by switching connections between the MOS transistors and different ports. Control logic is simple, a circuit architecture is simple, and costs are reduced because no circuit component needs to be added. In addition, the MOS transistors have a short switching time, and can implement quick switching of the series/parallel connection manner between the plurality of second-level DC/DC conversion circuits, thereby improving operating efficiency of the system.

In a possible implementation, the switching module includes a plurality of IGBT. A plurality of IGBT are connected to corresponding ports on a plurality of second-level DC/DC conversion circuits, and a series/parallel connection manner between the plurality of second-level DC/DC conversion circuits is switched by switching connections between the IGBT and different ports. Control logic is simple, a circuit architecture is simple, and no circuit component needs to be added, thereby reducing costs. The IGBT has advantages of a low saturation voltage drop, high current-carrying density, and low drive power, thereby improving operating efficiency of the system.

In a possible implementation, the first-level DC/DC conversion circuit is a Buck-Boost circuit, and the second-level DC/DC conversion circuit is an LLC conversion circuit. When the battery is in a charging state, the Buck-Boost circuit is configured to reduce a voltage of a first port of the Buck-Boost circuit, and the LLC conversion circuit is configured to reduce a voltage of a first port of the LLC conversion circuit to a charging voltage required by the battery. When the battery is in a discharging state, the LLC conversion circuit is configured to boost a voltage of the battery, and the Buck-Boost circuit is configured to boost a voltage of a second port of the Buck-Boost circuit and then output the boosted voltage to an external device. The LLC conversion circuit has a simple structure, and generally includes components such as a switching transistor, a transformer, a capacitor, and an inductor. The LLC conversion circuit has a small size and has a high power density, thereby improving electric energy conversion efficiency of the system.

In a possible implementation, the first-level DC/DC conversion circuit is a Buck-Boost circuit, and the second-level DC/DC conversion circuit is a dual-active bridge conversion circuit. When the battery is in a charging state, the Buck-Boost circuit is configured to reduce a voltage of a first port of the Buck-Boost circuit, and the dual-active bridge conversion circuit is configured to reduce a voltage of a second port of the dual-active bridge conversion circuit to a charging voltage required by the battery. When the battery is in a discharging state, the dual-active bridge conversion circuit is configured to boost a voltage of the battery, and the Buck-Boost circuit is configured to boost a voltage of the second port of the Buck-Boost circuit and output the boosted voltage to an external device. The dual-active bridge conversion circuit has advantages such as high conversion efficiency, a high power density, low voltage stresses and current stresses of power devices, and easy implementation, a simple structure, and easy integration of a soft switch, which improves the electric energy conversion efficiency of the system.

In a possible implementation, the power conversion circuit includes a first-level DC/DC conversion circuit, two second-level DC/DC conversion circuits, a switching module, and a controller. A first end of the first-level DC/DC conversion circuit is configured to connect to an external device, a second end of the first-level DC/DC conversion circuit is connected to a first end of the switching module, a first connection point of the first-level DC/DC conversion circuit is connected to a first connection point of a second-level DC/DC conversion circuit A, a second connection point of the first-level DC/DC conversion circuit is connected to a second connection point of a second-level DC/DC conversion circuit B, and a second connection point of the second-level DC/DC conversion circuit A is connected to a second end of the switching module, a first connection point of the second-level DC/DC conversion circuit B is connected to a second end of the switching module. A second end of the second-level DC/DC conversion circuit A and a second end of the second-level DC/DC conversion circuit B are connected to a first end of the battery.

In a possible implementation, the external device is a direct current source, and the direct current source provides an output voltage to the battery through the power conversion circuit.

In a possible implementation, the external device is a load, and the battery provides a charging voltage to the load through the power conversion circuit.

In a possible implementation, the external device is an energy storage converter. The energy storage converter may provide an output voltage to the battery through the power conversion circuit, or may receive an output voltage of the battery through the power conversion circuit, to implement bidirectional conversion of electric energy.

According to a second aspect, this application provides a control method for a power conversion circuit, where the power conversion circuit includes a controller, a first-level DC/DC conversion circuit, a plurality of second-level DC/DC conversion circuits, and a switching module; a first end of the first-level DC/DC conversion circuit is configured to connect to an external device, a second end of the first-level DC/DC conversion circuit is connected to a first end of the switching module, a first end of each second-level DC/DC conversion circuit is connected to a second end of the switching module, and a second end of each second-level DC/DC conversion circuit is configured to connect to a battery; one first capacitor is connected in parallel to the first-level DC/DC conversion circuit; and one second capacitor is connected in parallel to each second-level DC/DC conversion circuit. The control method includes: when a voltage of the battery is less than a first voltage threshold and a voltage value of a first capacitor and a voltage value of a second capacitor are less than a third voltage threshold, controlling the switching module to be turned off or turned on, so that the plurality of second-level DC/DC conversion circuits are connected in series; or when a voltage of a battery is greater than a second voltage threshold and a voltage value of a first capacitor and a voltage value of a second capacitor are less than a third voltage threshold, controlling the switching module to be turned off or turned on, so that the plurality of second-level DC/DC conversion circuits are connected in parallel. According to the control method, when series/parallel connection switching is performed on a plurality of second-level DC/DC conversion circuits, voltages of the first capacitor and the second capacitor are reduced, so that a high current is not caused by a sudden voltage change of each capacitor, and a switch or a component connected to each capacitor is not damaged. Control logic is simple, and a switching time is short, thereby improving electric energy conversion efficiency of a system.

In a possible implementation, the control method for a power conversion circuit further includes: when the voltage of the battery is less than the first voltage threshold or when the voltage of the battery is greater than the second voltage threshold, adjusting the PWM signal of the first-level DC/DC conversion circuit to reduce the voltage values of the first capacitor and the second capacitor to be less than the third voltage threshold, so as to ensure that the voltages at two ends of the first capacitor and the second capacitor are within a safe operating voltage range before the plurality of second-level DC/DC conversion circuits are switched, and avoid a sudden voltage change of the first capacitor and the second capacitor.

In a possible implementation, the control method for a power conversion circuit further includes: before the PWM signal of the first-level DC/DC conversion circuit is adjusted, controlling each second-level DC/DC conversion circuit to stop operating.

In a possible implementation, the control method for a power conversion circuit further includes: after adjusting the PWM signal of the first-level DC/DC conversion circuit to reduce the voltage values of the first capacitor and the second capacitor to be less than the third voltage threshold, control the first-level DC/DC conversion circuit to stop operating, so as to ensure that the entire circuit stops operating when the series/parallel connection manner between the plurality of second-level DC/DC conversion circuits is switched, thereby ensuring safe switching.

In a possible implementation, the control method for a power conversion circuit further includes: after the first-level DC/DC conversion circuit is controlled to stop operating, controlling the switching module to be turned off or turned on, so that the plurality of second-level DC/DC conversion circuits are connected in series or in parallel, a time of the entire switching process is short, and the entire loop stops operating during switching, thereby ensuring safe switching.

In a possible implementation, the control method for a power conversion circuit further includes: detecting a voltage value of the battery and voltage values of the first capacitor and the second capacitor. In this method, battery charging and discharging voltages are accurately detected, and a series/parallel connection manner between the plurality of second-level DC/DC conversion circuits is changed accordingly, so as to change a voltage of a second port of the first-level DC/DC conversion circuit, change a boost ratio on both sides of the first-level DC/DC conversion circuit, and improve electric energy conversion efficiency of the system. In the method, the voltages at two ends of the first capacitor and the second capacitor are further accurately detected, to ensure that the voltages of the first capacitor and the second capacitor are already less than a safe operating voltage during series/parallel switching, thereby preventing a component from being damaged due to a high current generated by a sudden voltage change, and ensuring safe switching.

According to a third aspect, this application provides an energy storage apparatus according to claim 9. The energy storage apparatus includes two-level DC/DC conversion circuits. Two-level voltage conversion is performed on a voltage output by a power grid, and then the voltage is output to the battery, so that a voltage boost of the two-level DC/DC conversion circuits is relatively low, and operating efficiency of the energy storage apparatus is improved. A voltage of a second port of the first-level DC/DC conversion circuit is changed by switching the series/parallel connection manner between the plurality of second-level DC/DC conversion circuits, so as to change a boost ratio of the first-level DC/DC conversion circuit, improve electric energy conversion efficiency of the energy storage apparatus, and avoid damage to a switch or a component connected to the switch due to a sudden voltage change of the first capacitor and the second capacitor when the series/parallel connection manner between the plurality of second-level DC/DC conversion circuits is switched, thereby ensuring safe switching.

With reference to the third aspect, in an implementation, the controller is further configured to: when the voltage of the battery is less than the first voltage threshold or when the voltage of the battery is greater than the second voltage threshold, adjust a PWM signal of the first-level DC/DC conversion circuit to reduce voltage values of the first capacitor and the second capacitor to be less than the third voltage threshold. According to the power conversion circuit provided in this application, control logic for adjusting the voltage values of the first capacitor and the second capacitor is simple, and no circuit component needs to be added, thereby reducing costs and shortening a switching time.

With reference to the third aspect, in an implementation, the controller is configured to control, before the controller adjusts the PWM signal of the first-level DC/DC conversion circuit, each second-level DC/DC conversion circuit to stop operating.

With reference to the third aspect, in an implementation, the controller is further configured to: after adjusting the PWM signal of the first-level DC/DC conversion circuit to reduce the voltage values of the first capacitor and the second capacitor to be less than the third voltage threshold, control the first-level DC/DC conversion circuit to stop operating, so as to ensure that the entire circuit stops operating when the series/parallel connection manner between the plurality of second-level DC/DC conversion circuits is switched, thereby ensuring safe switching.

With reference to the third aspect, in an implementation, the controller is further configured to: after the first-level DC/DC conversion circuit stops operating, control the switching module to be turned off or turned on, so that the plurality of second-level DC/DC conversion circuits are connected in series or in parallel, a time of the entire switching process is short, and the entire loop stops operating during switching, thereby ensuring safe switching.

According to a fourth aspect, this application provides an energy storage system, where the energy storage system includes the energy storage apparatus and the energy storage converter provided in the third aspect, the energy storage apparatus is connected to the energy storage converter, the energy storage converter is configured to convert direct current energy output by the energy storage apparatus into alternating current energy, and output the alternating current energy to a power grid or a load, and/or the energy storage converter is configured to convert the alternating current energy output by the power grid into direct current energy, and output the direct current energy to the energy storage apparatus.

For beneficial effects of the energy storage system, refer to detailed descriptions of beneficial effects of the power conversion circuit and a battery pack. Details are not described herein again.

### BRIEF DESCRIPTION OF DRAWINGS

FIG. 1 is a first schematic diagram of a topology of a power conversion circuit according to an embodiment of this application;
FIG. 2 is a second schematic diagram of a topology of a power conversion circuit according to an embodiment of this application;
FIG. 3 is a third schematic diagram of a topology of a power conversion circuit according to an embodiment of this application;
FIG. 4 is a fourth schematic diagram of a topology of a power conversion circuit according to an embodiment of this application;
FIG. 5 is a fifth schematic diagram of a topology of a power conversion circuit according to an embodiment of this application;
FIG. 6 is a sixth schematic diagram of a topology of a power conversion circuit according to an embodiment of this application;
FIG. 7 is a first schematic flowchart of a control method according to an embodiment of this application; and
FIG. 8A and FIG. 8B are a first schematic flowchart of a control method according to an embodiment of this application.

Descriptions of reference numerals:
100-Power conversion circuit;
101-First-level DC/DC conversion circuit; 102-Switching module; 103-Second-level DC/DC conversion circuit; 104-Controller; 105-Detection circuit; 106-First capacitor; 107-Second capacitor;
1031-Second-level DC/DC conversion circuit A; 1032-Second-level DC/DC conversion circuit B;
200-External device; and
300-Battery.

### DESCRIPTION OF EMBODIMENTS

To make objectives, technical solutions, and advantages of this application clearer, the following further describes this application in detail with reference to accompanying drawings. However, example implementations can be implemented in a plurality of forms, and should not be construed as being limited to the implementations described herein. Identical reference numerals in the accompanying drawings denote identical or similar structures. Therefore, repeated description thereof is omitted. Expressions of positions and directions in embodiments of this application are described by using the accompanying drawings as an example. However, changes may also be made as required, and all the changes fall within the protection scope of this application. The accompanying drawings in embodiments of this application are merely used to illustrate relative positional relationships and do not represent an actual scale.

In embodiments of this application, terms such as "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features.

It should be noted that specific details are described below to facilitate understanding of this application. However, this application can be implemented in numerous other manners different from those described herein, and persons skilled in the art can make similar inferences without departing from the connotation of this application. Therefore, this application is not limited to the specific implementations disclosed below.

For ease of understanding, terms in embodiments of this application are first explained.

The term "and/or" describes only an association relationship for describing associated objects and represents that three relationships may exist. For example, A and/or B may represent the following three cases: Only A exists, both A and B exist, and only B exists.

"A plurality of" means "two or more".

"Connection" means an electrical connection, and a connection between two electrical components may be a direct or indirect connection between the two electrical components. For example, a connection between A and B may represent that A and B are directly connected to each other, or A and B are indirectly connected to each other through one or more other electrical elements. For example, the connection between A and B may alternatively represent that A and C are directly connected to each other, C and B are directly connected to each other, and A and B are connected to each other through C.

Currently, for large-scale photovoltaic power generation or wind power generation, a voltage of a power grid is usually relatively high, for example, an alternating voltage from 400 V to 800 V Consequently, a direct currentside voltage ranges from 550 V to 1500 V However, a voltage of a single battery is usually relatively low. For example, the voltage of a single battery is usually less than 60 V. Therefore, to meet a voltage requirement of the power grid, a plurality of batteries are usually directly connected in series to obtain a high voltage. In the power conversion circuit provided in this application, one battery may be one battery pack, and one battery pack may include one battery unit or more battery units (the battery unit may be a single cell, and a voltage of the battery unit is usually between 2.5 V and 4.2 V) that are connected in series or in parallel, to form a minimum energy storage and management unit. For ease of description, the following uses a battery as an example for description. In other words, in the power conversion circuit provided in this application, a battery is a minimum energy storage and management unit including one or more battery units that are connected in series or in parallel.

Pulse width modulation (PWM is to modulate widths of a series of pulses to obtain a required equivalent waveform (including a shape and an amplitude) and digitally code an analog signal level, that is, to adjust changes of a signal, energy, and the like by adjusting a duty cycle. The duty cycle is a percentage of the time when the signal is at a high level in an entire signal cycle.

A metal-oxide-semiconductor field-effect transistor (MOSFET) is a semiconductor device operating by using a field-effect principle, and may also be referred to as a MOS transistor, and generally includes three terminals: a gate, a source, and a drain.

An insulated gate bipolar transistor (IGBT) is a composite fully controlled voltage-driven power semiconductor device that includes a bipolar junction transistor (BJTt) and a MOSFET, and has advantages of a high input impedance of the MOSFET and a low conduction voltage drop of the BJT.

Relay: an electrical control device. The relay is an electrical control component that enables a step change of a controlled quantity to occur on an electrical output circuit when a change of an input quantity reaches a specified requirement. The relay has an interaction relationship between a control system and a controlled system, and is usually used in an automated control circuit. The relay can be understood as an automatic switch that uses a low current to control a high-current operation. Therefore, the relay provides functions such as automatic adjustment, security protection, and circuit conversion in a circuit, and may be widely used in remote control, telemetry, communication, automatic control, electromechanical integration, and power electronic devices, and is one of the most important control components.

Buck-Boost circuit: The Buck-Boost circuit is a common voltage/current conversion circuit, which can implement buck conversion and boost conversion, and may be applied to voltage converters in many power systems.

LLC conversion circuit: The LLC conversion circuit is a resonant circuit that implements outputting of a constant voltage by controlling a switching frequency (frequency regulation), and can implement zero voltage switching (ZVS) of two primary MOS switches on a primary side and zero current switching (ZCS) of a secondary rectifier diode. A soft switching technology can be used to reduce a switching loss of a power supply, and improve efficiency and power density of a power converter.

Dual-active bridge conversion circuit: The dual-active bridge conversion circuit generally includes two full-bridge converters. Alternating current sides of the two full-bridge converters are connected by using an inductor and a transformer. Each full-bridge converter uses square wave modulation to generate a high-frequency square wave on the alternating current side, and ignores excitation reactance. In this case, the dual-active bridge conversion circuit is equivalent to two alternating current sources connected to two ends of the inductor. A magnitude and direction of power flow can be adjusted by adjusting a phase shift between the two alternating current sources. The dual-active bridge conversion circuit can implement the electric isolation and the bidirectional flowing of the power of a direct current transformer, while the high frequency isolation transformer greatly improves the power density and modularity. In an application in the high voltage field, due to limitation of a voltage and a capacity level of a component, dual-active bridge conversion circuits are usually connected in series to increase a voltage level or connected in parallel to increase a power level. The dual-active bridge conversion circuit has advantages such as high conversion efficiency, a high power density, low voltage stresses and current stresses of power components, and easy implementation, a simple structure, and easy integration of a soft switch.

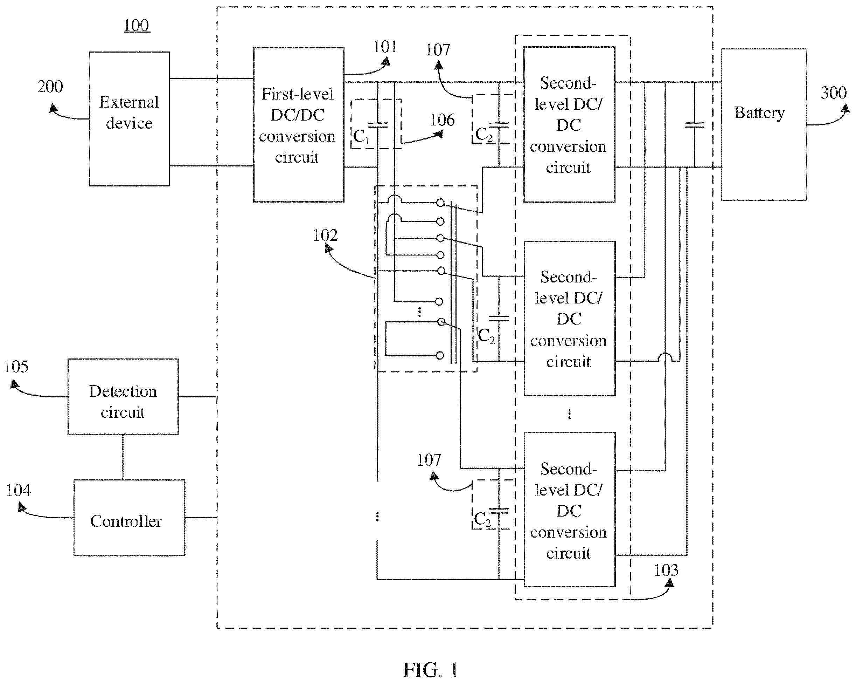

An embodiment of this application provides a power conversion circuit. According to FIG. 1, the power conversion circuit includes a controller 104, a first-level DC/DC conversion circuit 101, a plurality of second-level DC/DC conversion circuits 103, and a switching module 102. A first end of the first-level DC/DC conversion circuit 101 is configured to connect to an external device 200, and a second end of the first-level DC/DC conversion circuit 101 is connected to a first end of the switching module 102. A first end of each second-level DC/DC conversion circuit 103 is connected to a second end of the switching module 102, and a second end of each second-level DC/DC conversion circuit 103 is configured to connect to a battery. A first capacitor 106 is connected in parallel to the first-level DC/DC conversion circuit, and the first capacitor 106 is configured to stabilize a voltage of a second port of the first-level DC/DC conversion circuit. One second capacitor 107 is connected in parallel to each second-level DC/DC conversion circuit, and the second capacitor 107 is configured to stabilize a voltage of a first port of a corresponding second-level DC/DC conversion circuit that is connected. When a voltage of the battery 300 is less than a first voltage threshold, in this case, a boost ratio on both sides of the first-level DC/DC conversion circuit are excessively high, which reduces electric energy conversion efficiency of a system. When voltage values of the first capacitor 106 and the second capacitor 107 are less than a third voltage threshold, the controller 104 controls the switching module 102 to be turned off or turned on, so that the plurality of second-level DC/DC conversion circuits are connected in series. After the switching is completed, a voltage of the second port of the first-level DC/DC conversion circuit 101 is equal to a sum of voltages of first ports of the plurality of second-level DC/DC conversion circuits 103, thereby reducing a boost ratio of the first-level DC/DC conversion circuit 101. When the voltage of the battery 300 is greater than a second voltage threshold, the boost ratio on both sides of the first-level DC/DC conversion circuit are excessively low. When the voltage values of the first capacitor 106 and the second capacitor 107 are less than a third voltage threshold, the controller 104 controls the switching module 102 to be turned off or turned on, so that the plurality of second-level DC/DC conversion circuits 103 are connected in parallel. After the switching is completed, the voltage of the second port of the first-level DC/DC conversion circuit 101 is equal to voltages of the first ports of the plurality of second-level DC/DC conversion circuits 103, so that a boost ratio of the first-level DC/DC conversion circuit 101 is increased.

It should be noted that the controller 104 may be a processor or a controller, such as a general-purpose central processing unit (CPU), a general-purpose processor, a digital signal processor (DSP), an application specific integrated circuit (aASIC), a field programmable gate array (FPGA), or another programmable logic device, a transistor logic device, a hardware component, or any combination thereof. The processor may also be a combination of the foregoing types of controllers for implementing computing functions . For example, the controller 104 may include "one microprocessor or a combination of more than one microprocessor, a combination of a DSP and a microprocessor, or the like.

In some examples, when the voltage of the battery is less than the first voltage threshold, the controller 104 controls the plurality of second-level DC/DC conversion circuits 103 to stop operating. The controller 104 adjusts a PWM signal of the first-level DC/DC conversion circuit 101. After voltages of the first capacitor 106 and the second capacitor 107 are reduced to be less than the third voltage threshold, the controller 104 controls the first-level DC/DC conversion circuit 101 to stop operating. The controller 104 controls the switching module 102 to be turned off or turned on, so that the plurality of second-level DC/DC conversion circuits are connected in series. After the switching is completed, the voltage of the second port of the first-level DC/DC conversion circuit 101 is equal to the sum of the voltages of the first ports of the plurality of second-level DC/DC conversion circuits 103, thereby reducing a boost ratio of the first-level DC/DC conversion circuit 101. When the voltage of the battery 300 is greater than the second voltage threshold, the controller 104 controls the plurality of second-level DC/DC conversion circuits 103 to stop operating. The controller 104 controls and adjusts the PWM signal of the first-level DC/DC conversion circuit 101. After the voltages of the first capacitor 106 and the second capacitor 107 are reduced to be less than the third voltage threshold, the controller controls the first-level DC/DC conversion circuit 101 to stop operating. The controller 104 controls the switching module 102 to be turned off or turned on, so that the plurality of second-level DC/DC conversion circuits are connected in parallel. After the switching is completed, the voltage of the second port of the first-level DC/DC conversion circuit 101 is equal to voltages of the first ports of the plurality of second-level DC/DC conversion circuits 103, so that the boost ratio of the first-level DC/DC conversion circuit 101 is increased, and the battery is within a normal operating voltage range. This improves electric energy conversion efficiency within a wide operating voltage range, and avoids damage to a switch or a component connected to the switch due to a sudden voltage change of the first capacitor 106 and the second capacitor 107 when the series/parallel connection manner between the plurality of second-level DC/DC conversion circuits 103 is switched, thereby ensuring safe switching. According to the power conversion circuit provided in this embodiment of this application, control logic for adjusting voltage values of the first capacitor 106 and the second capacitor 107 is simple, and no circuit component needs to be added, thereby reducing costs and shortening a switching time.

In some examples, the first-level DC/DC conversion circuit 101 is configured to reduce a voltage of a first port of the first-level DC/DC conversion circuit 101, and the second-level DC/DC conversion circuit 103 is configured to reduce a voltage of a first port of the second-level DC/DC conversion circuit 103 to a charging voltage required by the battery, so as to charge the battery. When the battery is in a discharging state, the second-level DC/DC conversion circuit 103 is configured to boost a voltage of the second port of the second-level DC/DC conversion circuit 103, and the first-level DC/DC conversion circuit 101 is configured to boost a voltage of a second port of the first-level DC/DC conversion circuit 101 and output the boosted voltage to the external device 200. The power conversion circuit may be applied to both a battery charging scenario and a battery discharging scenario, to implement bidirectional conversion of electric energy. The power conversion circuit may be used in a wide range of scenarios, thereby improving application flexibility of the power conversion circuit.

According to the invention, the power conversion circuit further includes a detection circuit 105. The detection circuit 105 is configured to detect a voltage value of the battery and a voltage value of the first capacitor 106 and a voltage value of the second capacitor 107, to accurately detect a charging/discharging voltage of the battery 300, and accordingly change a series/parallel connection manner between the plurality of second-level DC/DC conversion circuits 103, so as to change the voltage of the second port of the first-level DC/DC conversion circuit 101, change a boost ratio on both sides of the first-level DC/DC conversion circuit 101, and improve the electric energy conversion efficiency of the system. The power conversion circuit accurately detects the voltages of the first capacitor 106 and the second capacitor 107, to ensure that the voltages of the first capacitor 106 and the second capacitor 107 are less than the third voltage threshold during series/parallel switching and are reduced to be less than a safe operating voltage, thereby preventing a component from being damaged due to a high current generated by a sudden voltage change, and ensuring safe switching. A specific location of the detection circuit 105 is not limited in this embodiment of this application. For example, the detection circuit 105 may be a part of the controller 104, or may be independent of the controller 104. The controller 104 is configured to obtain the voltage values that are of the battery, the first capacitor 106, and the second capacitor 107 and that are detected by the detection circuit 105.

A communication manner between the controller 104 and the detection circuit 105, the first-level DC/DC conversion circuit 101, and the second-level DC/DC conversion circuit 103 is not specifically limited in this embodiment of this application. The communication manner may be a wired communication manner or a wireless communication manner. The controller 104 and the detection circuit 105 may communicate based on an RS-485 bus, or communicate based on a CAN (Controller Area Network) protocol. In another embodiment, communication may also be performed based on another communication manner.

In some examples, the switching module 102 includes a relay, a MOS transistor, or an IGBT. Specific quantities of relays, MOS transistors, and IGBT in the switching module 102 are not specifically limited in this embodiment of this application. Specific quantities and connection manners are determined by a person skilled in the art based on a specific application scenario, a system architecture, and a specific quantity of the second-level DC/DC conversion circuits 103.

In some examples, the first-level DC/DC conversion circuit 101 is a Buck-Boost circuit, and the second-level DC/DC conversion circuit 103 is an LLC conversion circuit. Both the Buck-Boost circuit and the LLC conversion circuit can implement bidirectional power conversion. The LLC conversion circuit has a simple structure, and generally includes components such as a switching transistor, a transformer, a capacitor, and an inductor. The LLC conversion circuit has a small size and has a high power density, thereby improving electric energy conversion efficiency. The LLC conversion circuit may output a plurality of different direct current voltages, to meet battery charging requirements in different scenarios, and improve flexibility of the power conversion circuit. In addition, a plurality of LLC conversion circuits may be electrically isolated. When the battery is in a charging state, the Buck-Boost circuit is configured to reduce a voltage of a first port of the Buck-Boost circuit, and the LLC conversion circuit is configured to reduce a voltage of a first port of the LLC conversion circuit to a charging voltage required by the battery. When the battery is in a discharging state, the LLC conversion circuit is configured to boost a voltage of a second port of the LLC conversion circuit, and the Buck-Boost circuit is configured to boost a voltage of a second port of the Buck-Boost circuit and then output the boosted voltage to an external device.

In some examples, the first-level DC/DC conversion circuit 101 is a Buck-Boost circuit, and the second-level DC/DC conversion circuit is a dual-active bridge conversion circuit. When the battery is in the charging state, the Buck-Boost circuit is configured to reduce the voltage of the first port of the Buck-Boost circuit, and the dual-active bridge conversion circuit is configured to reduce the voltage of the first port of the dual-active bridge conversion circuit to a charging voltage required by the battery. When the battery is in the discharging state, the dual-active bridge conversion circuit is configured to boost the voltage of the second port of the dual-active bridge, and the Buck-Boost circuit is configured to boost the voltage of the second port of the Buck-Boost circuit and output the boosted voltage to an external device.

It should be noted that specific topology structures of the first-level DC/DC conversion circuit 101 and the second-level DC/DC conversion circuit 103 are not specifically limited in this embodiment of this application. For example, when the power conversion circuit provided in this embodiment of this application is used only in a charging scenario or used only in a discharging scenario, the first-level DC/DC conversion circuit 101 may alternatively be a buck circuit or a boost circuit, and the second-level DC/DC conversion circuit 103 may alternatively be a bridge topology of another type.

A quantity of second-level DC/DC conversion circuits 103 is not specifically limited in this embodiment of this application. For example, the power conversion circuit may include two second-level DC/DC conversion circuits, three second-level DC/DC conversion circuits, four second-level DC/DC conversion circuits, and the like. A quantity of switches matches the quantity of the second-level DC/DC conversion circuits. A person skilled in the art may choose to set the quantities of the second-level DC/DC conversion circuits and the switches based on a specific application scenario and a specific requirement.

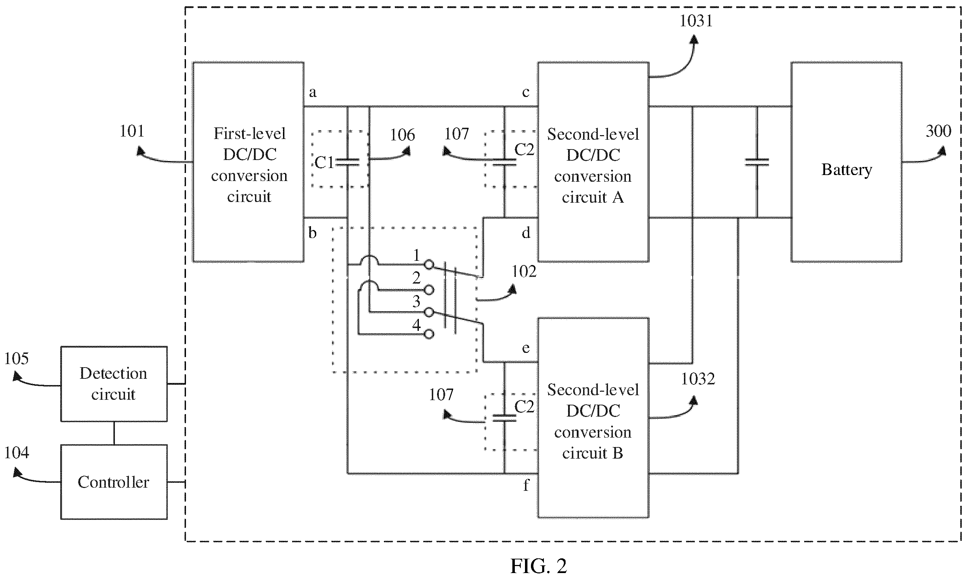

Optionally, the power conversion circuit includes two second-level DC/DC conversion circuits 103, that is, the power conversion circuit includes a second-level DC/DC conversion circuit A1031 and a second-level DC/DC conversion circuit B1032. As shown in FIG. 2, a first end of a first-level DC/DC conversion circuit 101 is connected to an external device, a second end of the first-level DC/DC conversion circuit 101 is connected to a first end of a switching module 102, a first connection point a of the first-level DC/DC conversion circuit 101 is connected to a first connection point c of a second-level DC/DC conversion circuit A1031, a second connection point b of the first-level DC/DC conversion circuit 101 is connected to a second connection point f of a second-level DC/DC conversion circuit B1032, a second connection point d of the second-level DC/DC conversion circuit A1031 is connected to the first end of the switching module 102, and a first connection point e of the second-level DC/DC conversion circuit B1032 is connected to the second end of the switching module 102. A second end of the second-level DC/DC conversion circuit A1031 and a second end of the second-level DC/DC conversion circuit B1032 are connected to a first end of a battery.

Optionally, according to FIG. 2, the power conversion circuit includes a first-level DC/DC conversion circuit 101, a second-level DC/DC conversion circuit A1031, and a second-level DC/DC conversion circuit B1032. The switching module 102 includes a relay, and the relay includes four contacts: a first contact 1, a second contact 2, a third contact 3, and a fourth contact 4. When the second connection point d of the second-level DC/DC conversion circuit A1031 is connected to the second contact 2, and the first connection point e of the second-level DC/DC conversion circuit B1032 is connected to the fourth contact 4, the second-level DC/DC conversion circuit A1031 is connected to the second-level DC/DC conversion circuit B1032 in series. When the second connection point d of the second-level DC/DC conversion circuit A1031 is connected to the first contact 1, and the first connection point e of the second-level DC/DC conversion circuit B1032 is connected to the third contact 3, the second-level DC/DC conversion circuit A1031 is connected to the second-level DC/DC conversion circuit B1032 in parallel.

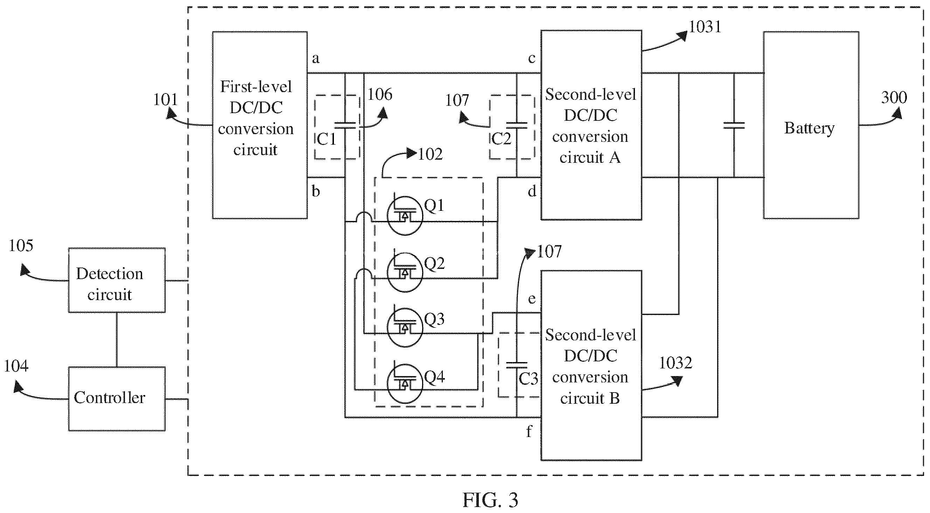

Optionally, the power conversion circuit includes the first-level DC/DC conversion circuit 101, the second-level DC/DC conversion circuit A1031, and the second-level DC/DC conversion circuit B1032. The switching module 102 includes four MOS transistors: a first MOS transistor Q1, a second MOS transistor Q2, a third MOS transistor Q3, and a fourth MOS transistor Q4, as shown in FIG. 3. A first end of the first MOS transistor Q1 is connected to a second connection point b of the first-level DC/DC conversion circuit 101, a second end of the first MOS transistor Q1 is connected to a second connection point d of the second-level DC/DC conversion circuit A1031, a first end of the second MOS transistor Q2 is connected to a first end of the fourth MOS transistor Q4, a second end of the second MOS transistor Q2 is connected to the second connection point d of the second-level DC/DC conversion circuit A1031, a first end of the third MOS transistor Q3 is connected to the first connection point b of the first-level DC/DC conversion circuit 101B, a second end of the third MOS transistor Q3 is connected to a first connection point e of the second-level DC/DC conversion circuit B1032, the first end of the fourth MOS transistor Q4 is connected to the first end of the second MOS transistor Q2, and a second end of the fourth MOS transistor Q4 is connected to the first connection point e of the second-level DC/DC conversion circuit B1032. When the first MOS transistor Q1 and the third MOS transistor Q3 are turned on, and the second MOS transistor Q2 and the fourth MOS transistor Q4 are turned off, the second-level DC/DC conversion circuit A is connected in parallel to the second-level DC/DC conversion circuit B. When the second MOS transistor Q2 and the fourth MOS transistor Q4 are turned on, and the first MOS transistor Q1 and the third MOS transistor Q3 are turned off, the second-level DC/DC conversion circuit A is connected in series to the second-level DC/DC conversion circuit B.

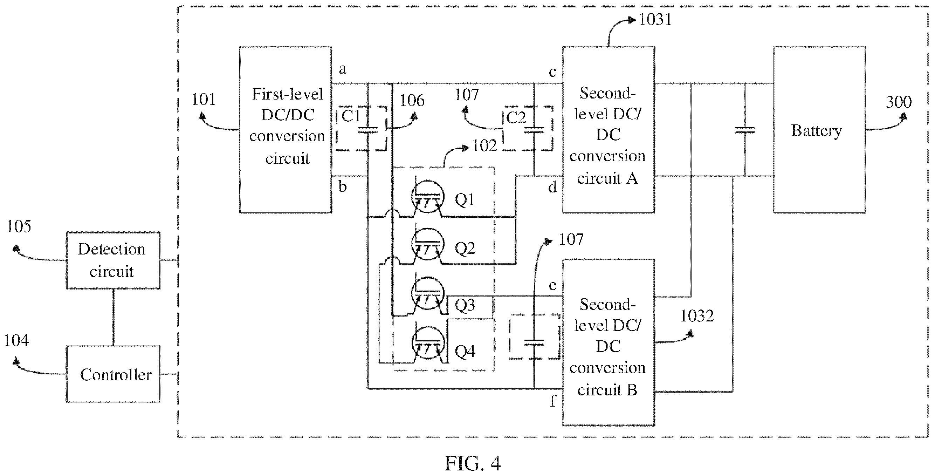

Optionally, the power conversion circuit includes the first-level DC/DC conversion circuit 101, the second-level DC/DC conversion circuit A1031, and the second-level DC/DC conversion circuit B1032. The switching module 102 includes four IGBTs: a first IGBT Q1, a second IGBT Q2, a third IGBT Q3, and a fourth IGBT Q4, as shown in FIG. 4. The power conversion circuit provided in this embodiment of this application includes the first IGBT Q1, the second IGBT Q2, the third IGBT Q3, and the fourth IGBT Q4. A first end of the first IGBT Q1 is connected to a second connection point b of the first-level DC/DC conversion circuit 101, a second end of the first IGBT Q1 is connected to a second connection point d of a second-level DC/DC conversion circuit A1031, a first end of the second IGBT Q2 is connected to a first end of the fourth IGBT Q4, a second end of the second IGBT Q2 is connected to the second connection point d of the second-level DC/DC conversion circuit A1031, a first end of the third IGBT Q3 is connected to the first connection point b of the first-level DC/DC conversion circuit 101B, a second end of the third IGBT Q3 is connected to a first connection point e of the second-level DC/DC conversion circuit B1032, the first end of the fourth IGBT Q4 is connected to the first end of the second IGBT Q2, and a second end of the fourth IGBT Q4 is connected to the first connection point e of the second-level DC/DC conversion circuit B1032. When the first IGBT Q1 and the third IGBT Q3 are turned on, and the second IGBT Q2 and the fourth IGBT Q4 are turned off, the second-level DC/DC conversion circuit A is connected in parallel to the second-level DC/DC conversion circuit B. When the second IGBT Q2 and the fourth IGBT Q4 are turned on, and the first IGBT Q1 and the third IGBT Q3 are turned off, the second-level DC/DC conversion circuit A1031 is connected in series to the second-level DC/DC conversion circuit B1032.

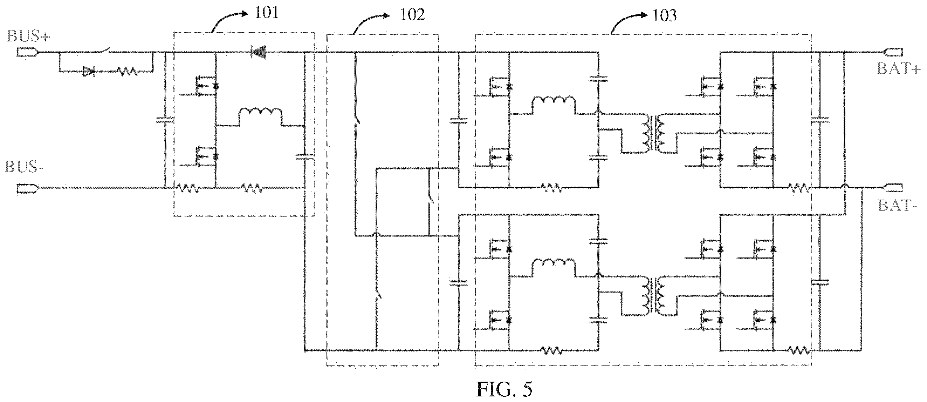

Optionally, the power conversion circuit includes a first-level DC/DC conversion circuit 101 and two second-level DC/DC conversion circuits 103. According to FIG. 5, the two second-level DC/DC conversion circuits are two LLC conversion circuits. When a voltage of a battery is less than a first voltage threshold, a controller 104 controls each LLC conversion circuit to stop operating. The controller 104 adjusts a PWM signal of the first-level DC/DC conversion circuit 101 to reduce voltages at two ends of the first capacitor 106 and the second capacitor 107 to be less than a third voltage threshold, the controller 104 controls the first-level DC/DC conversion circuit 101 to stop operating. The controller 104 controls the switching module 102 to turn off K1 and K3 and turn on K2. After the switching is completed, the two LLC conversion circuits are in a series connection mode, and a voltage of the second port of the first-level DC/DC conversion circuit 101 is a sum of voltages of the first ports of the two LLC conversion circuits, so as to reduce a boost ratio on both sides of the first-level DC/DC conversion circuit 101. When the voltage of the battery is greater than a second voltage threshold, and in this case, the voltage of the second port of the first-level DC/DC conversion circuit 101 is excessively high, the controller 104 controls each LLC conversion circuit to stop operating, the controller 104 adjusts the PWM signal of the first-level DC/DC conversion circuit 101, to reduce voltages at two ends of the first capacitor 106 and the second capacitor 107 to be less than the third voltage threshold. The controller 104 controls the first-level DC/DC conversion circuit 101 to stop operating. The controller 104 controls the switching module 102 to turn on K1 and K3 and turn off K2. After the switching is completed, the two LLC conversion circuits are in a parallel connection mode, and a voltage of a second port of the first-level DC/DC conversion circuit 101 is equal to voltages of the first ports of the two LLC conversion circuits, thereby meeting a requirement of a battery operating voltage.

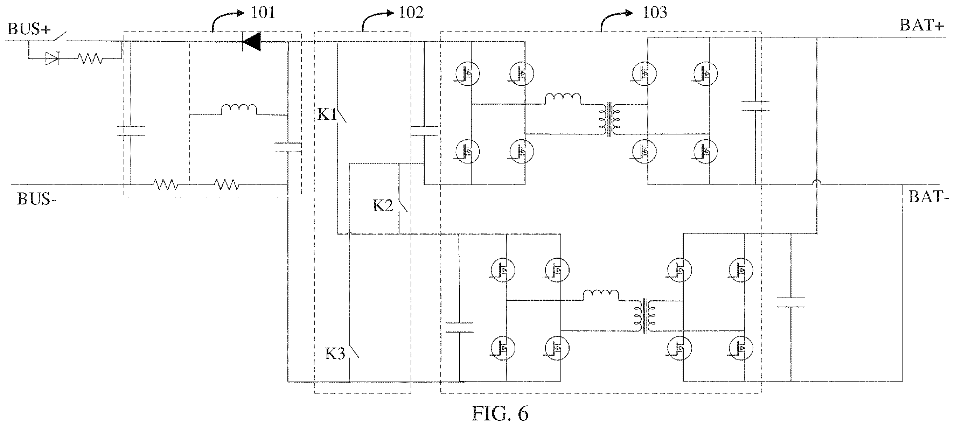

According to FIG. 6, the power conversion circuit includes a first-level DC/DC conversion circuit 101 and two second-level DC/DC conversion circuits. The two second-level DC/DC conversion circuits are two dual-active bridge conversion circuits. When a voltage of a battery is less than a first voltage threshold, a controller 104 controls each dual-active bridge conversion circuit to stop operating, the controller 104 adjusts a PWM signal of the first-level DC/DC circuit to reduce voltages at two ends of the first capacitor 106 and the second capacitor 107 to be less than a third voltage threshold, the controller 104 controls the first-level DC/DC conversion circuit 101 to stop operating. The controller 104 controls the switching module 102 to turn off K1 and K3 and turn on K2. After the switching is completed, the two dual-active bridge conversion circuits are in a series connection mode, and a voltage of the second port of the first-level DC/DC conversion circuit 101 is a sum of the voltage of the first ports of the two dual-active bridge conversion circuits, so as to reduce a boost ratio on both sides of the first-level DC/DC conversion circuit 101. When the voltage of the battery is greater than a second voltage threshold, and in this case, the voltage of the second port of the first-level DC/DC conversion circuit 101 is excessively high, the controller 104 controls each dual-active bridge conversion circuit to stop operating, the controller 104 adjusts the PWM signal of the first-level DC/DC conversion circuit 101, to reduce the voltages at two ends of the first capacitor 106 and the second capacitor 107 to be less than a third voltage threshold. The controller 104 controls the first-level DC/DC conversion circuit 101 to stop operating. The controller 104 controls the switching module 102 to turn on K1 and K3 and turn off K2. After the switching is completed, the two dual-active bridge conversion circuits are in a parallel connection mode, and the voltage of the second port of the first-level DC/DC conversion circuit 101 is equal to voltages of the first ports of the two dual-active bridge conversion circuits, thereby meeting a requirement of a battery operating voltage.

It should be noted that none of the first voltage threshold, the second voltage threshold, and the third voltage threshold is specifically limited in this embodiment of this application. A person skilled in the art may preset related parameters based on a specific application scenario and a system architecture.

For example, if an operating voltage range of the battery is 20 V to 30 V, the first voltage threshold is set to 24 V, the second voltage threshold is set to 26 V, and the third voltage threshold is set to 20 V. A voltage range of a first port of the first-level DC/DC conversion circuit 101 is 600 V to 900 V When the system is in a charging state, the detection circuit 105 detects a voltage value of the battery in real time. When the battery voltage is less than 24 V, the controller 104 controls the plurality of second-level DC/DC conversion circuits 103 to stop operating. The controller 104 controls a PWM signal of the first-level DC/DC conversion circuit 101. After the voltages at two ends of the first capacitor 106 and the second capacitor 107 are reduced to be less than 20 V, the controller 104 controls the first-level DC/DC conversion circuit 101 to stop operating. After the entire circuit stops operating, the controller 104 controls the switching module 102 to be turned off or turned on, so that the plurality of second-level DC/DC conversion circuits 103 are in a series connection mode. The controller 104 confirms that the switching is completed, and the controller 104 indicates the first-level DC/DC conversion circuit 101 and the plurality of second-level DC/DC conversion circuits 103 to resume operating. If the switching fails, the system generates an alarm and shuts down. When the battery voltage is greater than 26 V, the controller 104 controls each second-level DC/DC conversion circuit 103 to stop operating. The controller 104 controls a PWM signal of the first-level DC/DC conversion circuit 101. After the voltages at two ends of the first capacitor 106 and the second capacitor 107 are reduced to be less than 20 V, the controller 104 controls the first-level DC/DC conversion circuit 101 to stop operating. After the entire circuit stops operating, the controller 104 controls the switching module 102 to be turned off or turned on, so that the plurality of second-level DC/DC conversion circuits 103 are in a parallel connection mode. The controller 104 confirms that the switching is completed, and the controller 104 indicates the first-level DC/DC conversion circuit 101 and the plurality of second-level DC/DC conversion circuits 103 to resume operating. If the switching fails, the system generates an alarm and shuts down.

In some examples, the external device 200 is a direct current source. The first-level DC/DC conversion circuit 101 receives an output voltage of the direct current source, performs voltage conversion, and provides an output voltage to a plurality of second-level DC/DC conversion circuits 103. After performing voltage conversion on the output voltage provided by the first-level DC/DC conversion circuit 101, the second-level DC/DC conversion circuit 103 provides an input voltage required for charging the battery.

In some examples, the external device 200 is a load. The battery provides an output voltage to each second-level DC/DC conversion circuit 103. The second-level DC/DC conversion circuit 103 performs voltage conversion on the output voltage provided by the battery, and then transmits the converted voltage to the first-level DC/DC conversion circuit 101. The first-level DC/DC conversion circuit 101 converts the input voltage provided by the second-level DC/DC conversion circuit 103 into a voltage required by the external load, and supplies power to the external load.

In some examples, the external device 200 is an energy storage converter. When the battery 300 is in a charging state, the first-level DC/DC conversion circuit 101 receives an output voltage of the energy storage converter, performs voltage conversion, and provides an output voltage to a plurality of second-level DC/DC conversion circuits 103. After performing voltage conversion on the output voltage provided by the first-level DC/DC conversion circuit 101, the second-level DC/DC conversion circuit 103 provides an input voltage required for charging the battery. When the battery 300 is in a discharging state, the battery provides an output voltage to each second-level DC/DC conversion circuit 103. The second-level DC/DC conversion circuit 103 performs voltage conversion on the output voltage provided by the battery, and then transmits the converted voltage to the first-level DC/DC conversion circuit 101. The first-level DC/DC conversion circuit 101 converts the input voltage provided by the second-level DC/DC conversion circuit 103, and then provides an output voltage to the energy storage converter.

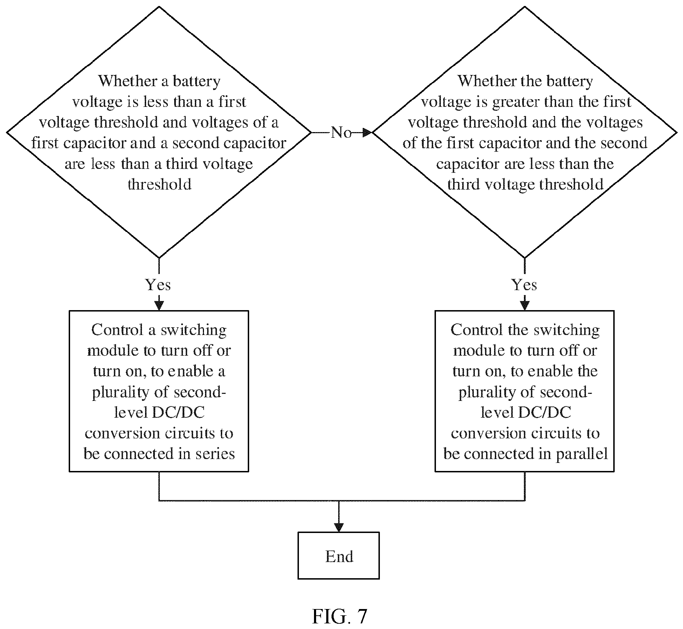

An embodiment of this application further provides a control method for a power conversion circuit. As shown in FIG. 7, in some examples, the power conversion circuit includes a controller 104, a first-level DC/DC conversion circuit 101, a plurality of second-level DC/DC conversion circuits 103, and a switching module 102. A first end of the first-level DC/DC conversion circuit 101 is configured to connect to an external device 200, and a second end of the first-level DC/DC conversion circuit 101 is connected to a first end of the switching module 102. A first end of each second-level DC/DC conversion circuit 103 is connected to a second end of the switching module 102, and a second end of each second-level DC/DC conversion circuit 103 is configured to connect to a battery. The control method includes: when a voltage of the battery 300 is less than a first voltage threshold, in this case, a boost ratio on both sides of the first-level DC/DC conversion circuit are excessively high, which reduces electric energy conversion efficiency of a system; when voltage values of the first capacitor 106 and the second capacitor 107 are less than a third voltage threshold, controlling the switching module 102 to be turned off or turned on, so that the plurality of second-level DC/DC conversion circuits are connected in series; after the switching is completed, a voltage of the second port of the first-level DC/DC conversion circuit 101 is equal to a sum of voltages of first ports of the plurality of second-level DC/DC conversion circuits 103, thereby reducing a boost ratio of the first-level DC/DC conversion circuit 101, and improving electric energy conversion efficiency of the system; when the voltage of the battery 300 is greater than a second voltage threshold, the boost ratio on both sides of the first-level DC/DC conversion circuit are excessively low; and when the voltage values of the first capacitor 106 and the second capacitor 107 are less than a third voltage threshold, controlling the switching module 102 to be turned off or turned on, so that the plurality of second-level DC/DC conversion circuits 103 are connected in parallel. After the switching is completed, the voltage of the second port of the first-level DC/DC conversion circuit 101 is equal to voltages of the first ports of the plurality of second-level DC/DC conversion circuits 103, so that a boost ratio of the first-level DC/DC conversion circuit 101 is increased, and the battery operates within a normal operating voltage range. According to the control method, when the plurality of second-level DC/DC conversion circuits 103 perform series/parallel connection switching, the voltages of the first capacitor 106 and the second capacitor 107 are reduced to be less than a safe operating voltage value, so as to avoid a sudden voltage change of the capacitor, so that a high current is not caused by a sudden voltage change of each capacitor, and a switch or a component connected to each capacitor is not damaged. Control logic is simple, and a switching time is short, thereby improving electric energy conversion efficiency of the system.

It should be noted that none of the first voltage threshold, the second voltage threshold, and the third voltage threshold is specifically limited in this embodiment of this application. A person skilled in the art may preset related parameters based on a specific application scenario and a system architecture.

In some examples, the control method for a power conversion circuit includes: when the voltage of the battery is less than the first voltage threshold or when the voltage of the battery is greater than the second voltage threshold, adjusting the PWM signal of the first-level DC/DC conversion circuit 101 to reduce the voltage values of the first capacitor 106 and the second capacitor 107 to be less than the third voltage threshold, so as to ensure that the voltages at two ends of the first capacitor 106 and the second capacitor 107 are within a safe operating voltage range before the plurality of second-level DC/DC conversion circuits 103 are switched, and avoid a sudden voltage change of the first capacitor 106 and the second capacitor 107.

In some examples, the control method for a power conversion circuit includes: before the PWM signal of the first-level DC/DC conversion circuit 101 is adjusted, controlling each second-level DC/DC conversion circuit 103 to stop operating.

In some examples, the control method for a power conversion circuit includes: after the PWM signal of the first-level DC/DC conversion circuit 101 is adjusted to reduce the voltages of the first capacitor 106 and the second capacitor 107 to be less than the third voltage threshold, controlling the first-level DC/DC conversion circuit 101 to stop operating, so as to ensure that when the series/parallel connection manner between the plurality of second-level DC/DC conversion circuits 103 is switched, the entire circuit stops operating, thereby ensuring safe switching.

In some examples, the control method for a power conversion circuit includes: after the first-level DC/DC conversion circuit 101 is controlled to stop operating, controlling the switching module 102 to be turned off or turned on, so that the plurality of second-level DC/DC conversion circuits 103 are connected in series or in parallel.

In some examples, the control method for a power conversion circuit includes: detecting a voltage value of the battery 300 and voltage values of the first capacitor 106 and the second capacitor 107. In this method, a charging/discharging voltage of the battery 300 is accurately detected, and a series/parallel connection manner between the plurality of second-level DC/DC conversion circuits 103 is changed accordingly, so as to change a voltage of a second port of the first-level DC/DC conversion circuit 101, change a boost ratio on both sides of the first-level DC/DC conversion circuit 101, and improve electric energy conversion efficiency of a system. In the method, the voltages of the first capacitor 106 and the second capacitor 107 are further accurately detected, to ensure that the voltages of the first capacitor 106 and the second capacitor 107 are already less than the third voltage threshold during series/parallel switching, and are reduced to be less than a safe operating voltage, thereby preventing a component from being damaged due to a high current generated by a sudden voltage change, and ensuring safe switching.

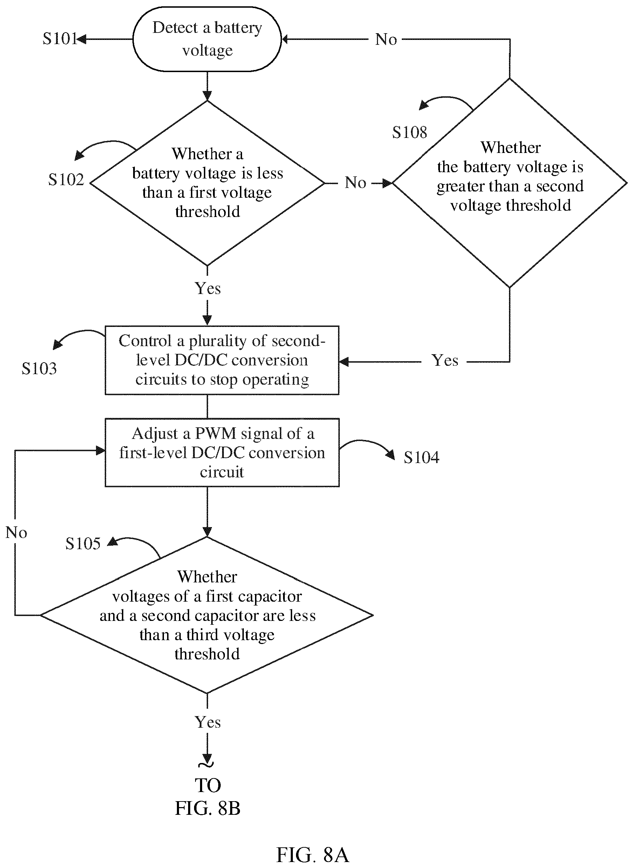

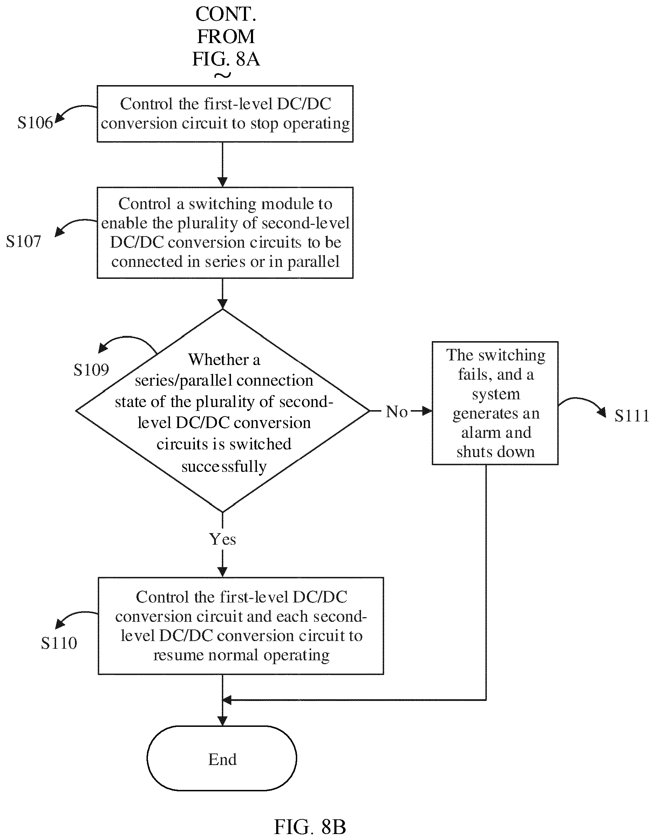

The following uses specific method steps as an example to describe operating logic of the control method. As shown in FIG. 8A and FIG. 8B, the control method includes the following steps.

Step S101: Detect a battery voltage.

Step S102: Determine whether the battery voltage is less than a first voltage threshold; and if the battery voltage is less than the first voltage threshold, perform step S103; or if the battery voltage is not less than the first voltage threshold, perform step S108.

Step S103: Control a plurality of second-level DC/DC conversion circuits to stop operating.

Step S104: Adjust a PWM signal of a first-level DC/DC conversion circuit.

Step S105: Determine whether voltages of a first capacitor and a second capacitor are less than a third voltage threshold; and if the voltages of the first capacitor and the second capacitor are less than the third voltage threshold, perform step S106; or if the voltages of the first capacitor and the second capacitor are not less than the third voltage threshold, perform step S104.

Step S106: Control the first-level DC/DC conversion circuit to stop operating.

Step S107: Control a switching module to enable a plurality of second-level DC/DC conversion circuits to be connected in series or in parallel.

Step S108: Determine whether the battery voltage is greater than a second voltage threshold; and if the battery voltage is greater than the second voltage threshold, perform step S103.

Step S109: Determine whether a series/parallel connection state of the plurality of second-level DC/DC conversion circuits is switched successfully; and if the switching succeeds, perform step S110; or if the switching fails, perform step S111.

Step S110: Control the first-level DC/DC conversion circuit and each second-level DC/DC conversion circuit to resume normal operating.

Step S111: A system generates an alarm and shuts down.

An embodiment of this application provides an energy storage apparatus. According to FIG. 1, the energy storage apparatus includes a battery 300, a controller 104, a first-level DC/DC conversion circuit, a plurality of second-level DC/DC conversion circuits, and a switching module 102. A first end of the first-level DC/DC conversion circuit is configured to connect to an external device 200, and a second end of the first-level DC/DC conversion circuit is connected to a first end of the switching module 102. A first end of each second-level DC/DC conversion circuit 103 is connected to a second end of the switching module 102, and a second end of each second-level DC/DC conversion circuit 103 is connected to the battery 300. One first capacitor 106 is connected in parallel to the first-level DC/DC conversion circuit; and one second capacitor 107 is connected in parallel to each second-level DC/DC conversion circuit. The controller 104 is configured to: when a voltage of the battery 300 is less than a first voltage threshold and voltage values of the first capacitor 106 and the second capacitor 107 are less than a third voltage threshold, control the switching module 102 to be turned off or turned on, so that the plurality of second-level DC/DC conversion circuits are connected in series; or when the voltage of the battery 300 is greater than a second voltage threshold and the voltage values of the first capacitor 106 and the second capacitor 107 are less than the third voltage threshold, control the switching module 102 to be turned off or turned on, so that the plurality of second-level DC/DC conversion circuits are connected in parallel. The energy storage apparatus includes two-level DC/DC conversion circuits. Two-level voltage conversion is performed on a voltage output by a power grid, and then the voltage is output to the battery 300, so that a voltage boost of the two-level DC/DC conversion circuits is relatively low, and operating efficiency of the energy storage apparatus is improved. The energy storage apparatus provided in this embodiment of this application can not only implement bidirectional flowing of electric energy, but also adjust a PWM signal of the first-level DC/DC conversion circuit 101 before the boost ratio on both sides of the first-level DC/DC conversion circuit 101 need to be changed by switching the series/parallel connection manner between the plurality of second-level DC/DC conversion circuits 103, so that a voltage of the first capacitor 106 and a voltage of the second capacitor 107 are reduced to be less than a third voltage threshold, to ensure that the voltage of the capacitor is less than a safe operating voltage before the series/parallel connection switching. This avoids a case in which a sudden voltage change occurs on the first capacitor 106 and the second capacitor 107 after the series/parallel connection switching is completed, thereby improving electric energy conversion efficiency, and ensuring safe switching, without damaging a load and a component that are connected to the capacitor.

In some examples, the controller 104 is configured to: when the voltage of the battery 300 is less than a first voltage threshold or when the voltage of the battery 300 is greater than a second voltage threshold, adjust a PWM signal of the first-level DC/DC conversion circuit 101 to reduce voltage values of the first capacitor 106 and the second capacitor 107 to be less than a third voltage threshold. According to the power conversion circuit provided in this application, control logic for adjusting voltage values of the first capacitor 106 and the second capacitor 107 is simple, and no circuit component needs to be added, thereby reducing costs and shortening a switching time.

In some examples, the controller 104 is configured to: before the controller 104 adjusts the PWM signal of the first-level DC/DC conversion circuit 101, control each second-level DC/DC conversion circuit 103 to stop operating.

In some examples, the controller 104 is further configured to: after adjusting the PWM signal of the first-level DC/DC conversion circuit 101 to reduce the voltage values of the first capacitor 106 and the second capacitor 107 to be less than the third voltage threshold, control the first-level DC/DC conversion circuit 101 to stop operating, so as to ensure that the entire circuit stops operating when the series/parallel connection manner between the plurality of second-level DC/DC conversion circuits 103 is switched, thereby ensuring safe switching.

In some examples, the controller 104 is further configured to: after the first-level DC/DC conversion circuit 101 stops operating, control the switching module 102 to be turned off or turned on, so that the plurality of second-level DC/DC conversion circuits 103 are connected in series or in parallel, a time of the entire switching process is short, and the entire loop stops operating during switching, thereby ensuring safe switching.

An embodiment of this application provides an energy storage system,. The energy storage system includes the energy storage apparatus and the energy storage converter provided in the third aspect, the energy storage apparatus is connected to the energy storage converter, the energy storage converter is configured to convert direct current energy output by the energy storage apparatus into alternating current energy, and output the alternating current energy to a power grid or a load, and/or the energy storage converter is configured to convert the alternating current energy output by the power grid into direct current energy, and output the direct current energy to the energy storage apparatus. The energy storage system provided in this embodiment of this application can not only implement bidirectional flowing of electric energy, but also adjust a PWM signal of the first-level DC/DC conversion circuit before the boost ratio on both sides of the first-side DC/DC conversion circuit need to be changed by switching the series/parallel connection manner between the plurality of second-level DC/DC conversion circuits, so that the voltages of the first capacitor and the second capacitor are reduced to be less than the third voltage threshold. This avoids a case in which a sudden voltage change occurs on the first capacitor and the second capacitor after the series/parallel connection switching is completed, thereby improving the electric energy conversion efficiency of the system, and ensuring safe switching.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power conversion circuit, wherein the power conversion circuit comprises a controller, a first-level DC/DC conversion circuit (101), a plurality of second-level DC/DC conversion circuits (103), and a switching module (102); a first end of the first-level DC/DC conversion circuit (101) is configured to connect to an external device (200), and a second end of the first-level DC/DC conversion circuit (101) is connected to a first end of the switching module (102); and a first end of each second-level DC/DC conversion circuit (103) is connected to a second end of the switching module (102), and a second end of each second-level DC/DC conversion circuit (103) is configured to connect to a battery (300);
one first capacitor (106) is connected in parallel to the first-level DC/DC conversion circuit (101) at the second end of the first-level DC/DC conversion circuit so as to stabilize a voltage of the second end of the first-level DC/DC conversion circuit;
one second capacitor (107) is connected in parallel to each second-level DC/DC conversion circuit (103) at the first end of the second-level DC/DC conversion circuit (103) so as to stabilize a voltage of the first end of the second-level DC/DC conversion circuit; and
the controller is configured to: when a voltage of the battery (300) is less than a first voltage threshold and voltage values of the first capacitor (106) and the second capacitor (107) are less than a third voltage threshold, control the switching module (102) to be turned off or turned on, so that the plurality of second-level DC/DC conversion circuits (103) are connected in series at their first end side; or
when the voltage of the battery (300) is greater than a second voltage threshold and the voltage values of the first capacitor (106) and the second capacitor (107) are less than the third voltage threshold, control the switching module (102) to be turned off or turned on, so that the plurality of second-level DC/DC conversion circuits (103) are connected in parallel;
wherein the power conversion circuit further comprises a detection circuit, and the detection circuit is configured to detect the voltage value of the battery (300) and the voltage values of the first capacitor (106) and the second capacitor (107).

2. The power conversion circuit according to claim 1, wherein the controller is further configured to: when the voltage of the battery (300) is less than the first voltage threshold or when the voltage of the battery (300) is greater than the second voltage threshold, adjust a PWM signal of the first-level DC/DC conversion circuit (101) to reduce voltage values of the first capacitor (106) and the second capacitor (107) to be less than the third voltage threshold.

3. The power conversion circuit according to claim 2, wherein the controller is further configured to: before adjusting the PWM signal of the first-level DC/DC conversion circuit (101), control each second-level DC/DC conversion circuit (103) to stop operating.

4. The power conversion circuit according to claim 2 or 3, wherein the controller is further configured to: after adjusting the PWM signal of the first-level DC/DC conversion circuit (101) to reduce the voltage values of the first capacitor (106) and the second capacitor (107) to be less than the third voltage threshold, control the first-level DC/DC conversion circuit (101) to stop operating.

5. The power conversion circuit according to claim 4, wherein the controller is configured to: after the first-level DC/DC conversion circuit (101) stops operating, control the switching module (102) to be turned off or turned on, so that the plurality of second-level DC/DC conversion circuits (103) are connected in series or in parallel.

6. The power conversion circuit according to any one of claims 1 to 5, wherein
the first-level DC/DC conversion circuit (101) is configured to reduce a voltage of a first port of the first-level DC/DC conversion circuit (101), and the second-level DC/DC conversion circuit (103) is configured to reduce a voltage of a first port of the second-level DC/DC conversion circuit (103) to a charging voltage required by the battery (300); or
the second-level DC/DC conversion circuit (103) is configured to boost a voltage of a second port of the second-level DC/DC conversion circuit (103), and the first-level DC/DC conversion circuit (101) is configured to boost a voltage of a second port of the first-level DC/DC conversion circuit (101) and output the boosted voltage to the external device (200) through the first end of the first-level DC/DC conversion circuit (101).

7. The power conversion circuit according to any one of claims 1 to 6, wherein the power conversion circuit comprises two second-level DC/DC conversion circuits (103).

8. The power conversion circuit according to any one of claims 1 to 7, wherein the external device (200) is a direct current source, a load, or an energy storage converter.

9. An energy storage apparatus comprising:
the power conversion circuit according to any one of the claims 1 to 8; and,
a battery (300).

10. The energy storage apparatus according to claim 9, wherein the controller is further configured to: when the voltage of the battery (300) is less than the first voltage threshold or when the voltage of the battery (300) is greater than the second voltage threshold, adjust a PWM signal of the first-level DC/DC conversion circuit (101) to reduce voltage values of the first capacitor (106) and the second capacitor (107) to be less than the third voltage threshold.

11. The energy storage apparatus according to claim 10, wherein the controller is further configured to: before adjusting the PWM signal of the first-level DC/DC conversion circuit (101), control each second-level DC/DC conversion circuit (103) to stop operating.

12. The energy storage apparatus according to claim 10 or 11, wherein the controller is further configured to: after adjusting the PWM signal of the first-level DC/DC conversion circuit (101) to reduce the voltage values of the first capacitor (106) and the second capacitor (107) to be less than the third voltage threshold, control the first-level DC/DC conversion circuit (101) to stop operating.

13. The energy storage apparatus according to claim 12, wherein the controller is configured to: after the first-level DC/DC conversion circuit (101) stops operating, control the switching module (102) to be turned off or turned on, so that the plurality of second-level DC/DC conversion circuits (103) are connected in series or in parallel.

14. An energy storage system, wherein the energy storage system comprises the energy storage apparatus according to any one of claims 9 to 13 and an energy storage converter, and the energy storage apparatus is connected to the energy storage converter; and
the energy storage converter is configured to convert direct current energy output by the energy storage apparatus into alternating current energy and output the alternating current energy to a power grid or a load, and/or the energy storage converter is configured to convert alternating current energy output by the power grid into direct current energy and output the direct current energy to the energy storage apparatus.

## Patentansprüche

1. Leistungsumwandlungsschaltung, wobei die Leistungsumwandlungsschaltung eine Steuerung, eine DC/DC-Umwandlungsschaltung (101) erster Ebene, eine Vielzahl von DC/DC-Umwandlungsschaltungen (103) zweiter Ebene und ein Schaltmodul (102) umfasst; ein erstes Ende der DC/DC-Umwandlungsschaltung (101) erster Ebene dazu konfiguriert ist, mit einer externen Einrichtung (200) verbunden zu werden, und ein zweites Ende der DC/DC-Umwandlungsschaltung (101) erster Ebene mit einem ersten Ende des Schaltmoduls (102) verbunden ist; und ein erstes Ende jeder DC/DC-Umwandlungsschaltung (103) zweiter Ebene mit einem zweiten Ende des Schaltmoduls (102) verbunden ist und ein zweites Ende jeder DC/DC-Umwandlungsschaltung (103) zweiter Ebene dazu konfiguriert ist, mit einer Batterie (300) verbunden zu werden; ein erster Kondensator (106) parallel zu der DC/DC-Umwandlungsschaltung (101) der ersten Ebene an dem zweiten Ende der DC/DC-Umwandlungsschaltung der ersten Ebene geschaltet ist, um eine Spannung an dem zweiten Ende der DC/DC-Umwandlungsschaltung der ersten Ebene zu stabilisieren;
ein zweiter Kondensator (107) parallel zu jeder DC/DC-Umwandlungsschaltung (103) der zweiten Ebene an dem ersten Ende der DC/DC-Umwandlungsschaltung (103) der zweiten Ebene geschaltet ist, um eine Spannung an dem ersten Ende der DC/DC-Umwandlungsschaltung der zweiten Ebene zu stabilisieren; und
die Steuerung zu Folgendem konfiguriert ist: wenn eine Spannung der Batterie (300) kleiner ist als ein erster Spannungsschwellenwert und Spannungswerte des ersten Kondensators (106) und des zweiten Kondensators (107) kleiner sind als ein dritter Spannungsschwellenwert, das Schaltmodul (102) so zu steuern, dass es aus- oder eingeschaltet wird, so dass die Vielzahl von DC/DC-Umwandlungsschaltungen (103) der zweiten Ebene an ihrer ersten Endseite in Reihe geschaltet wird; oder
wenn die Spannung der Batterie (300) größer ist als ein zweiter Spannungsschwellenwert und die Spannungswerte des ersten Kondensators (106) und des zweiten Kondensators (107) kleiner sind als der dritte Spannungsschwellenwert, das Schaltmodul (102) so zu steuern, dass es aus- oder eingeschaltet wird, so dass die Vielzahl von DC/DC-Umwandlungsschaltungen (103) der zweiten Ebene parallel geschaltet wird;
wobei die Leistungsumwandlungsschaltung ferner eine Erkennungsschaltung umfasst und die Erkennungsschaltung dazu konfiguriert ist, den Spannungswert der Batterie (300) und die Spannungswerte des ersten Kondensators (106) und des zweiten Kondensators (107) zu erkennen.

2. Leistungsumwandlungsschaltung nach Anspruch 1, wobei die Steuerung ferner zu Folgendem konfiguriert ist: wenn die Spannung der Batterie (300) kleiner als der erste Spannungsschwellenwert ist oder wenn die Spannung der Batterie (300) größer als der zweite Spannungsschwellenwert ist, Anpassen eines PWM-Signals der DC/DC-Umwandlungsschaltung (101) der ersten Ebene, um Spannungswerte des ersten Kondensators (106) und des zweiten Kondensators (107) so zu verringern, dass sie kleiner als der dritte Spannungsschwellenwert sind.

3. Leistungsumwandlungsschaltung nach Anspruch 2, wobei die Steuerung ferner zu Folgendem konfiguriert ist: vor dem Anpassen des PWM-Signals der DC/DC-Umwandlungsschaltung (101) der ersten Ebene, Steuern jeder DC/DC-Umwandlungsschaltung (103) der zweiten Ebene so, dass sie ihren Betrieb einstellt.

4. Leistungsumwandlungsschaltung nach Anspruch 2 oder 3, wobei die Steuerung ferner zu Folgendem konfiguriert ist: nach dem Anpassen des PWM-Signals der DC/DC-Umwandlungsschaltung (101) der ersten Ebene, um die Spannungswerte des ersten Kondensators (106) und des zweiten Kondensators (107) so zu verringern, dass sie kleiner als der dritte Spannungsschwellenwert sind, Steuern der DC/DC-Umwandlungsschaltung (101) der ersten Ebene so, dass sie ihren Betrieb einstellt.

5. Leistungsumwandlungsschaltung nach Anspruch 4, wobei die Steuerung ferner zu Folgendem konfiguriert ist: nachdem die DC/DC-Umwandlungsschaltung (101) der ersten Ebene ihren Betrieb eingestellt hat, das Schaltmodul (102) so zu steuern, dass es aus- oder eingeschaltet wird, so dass die Vielzahl von DC/DC-Umwandlungsschaltungen (103) der zweiten Ebene in Reihe oder parallel geschaltet wird.

6. Leistungsumwandlungsschaltung nach einem der Ansprüche 1 bis 5, wobei
die DC/DC-Umwandlungsschaltung (101) der ersten Ebene dazu konfiguriert ist, eine Spannung eines ersten Anschlusses der DC/DC-Umwandlungsschaltung (101) der ersten Ebene zu verringern, und die DC/DC-Umwandlungsschaltung (103) der zweiten Ebene dazu konfiguriert ist, eine Spannung eines ersten Anschlusses der DC/DC-Umwandlungsschaltung (103) der zweiten Ebene auf eine Ladespannung zu reduzieren, die durch die Batterie (300) benötigt wird; oder
die DC/DC-Umwandlungsschaltung (103) der zweiten Ebene dazu konfiguriert ist, eine Spannung eines zweiten Anschlusses der DC/DC-Umwandlungsschaltung (103) der zweiten Ebene zu erhöhen, und die DC/DC-Umwandlungsschaltung (101) der ersten Ebene dazu konfiguriert ist, eine Spannung eines zweiten Anschlusses der DC/DC-Umwandlungsschaltung (101) der ersten Ebene zu erhöhen und die erhöhte Spannung über das erste Ende der DC/DC-Umwandlungsschaltung (101) der ersten Ebene an die externe Einrichtung (200) auszugeben.

7. Leistungsumwandlungsschaltung nach einem der Ansprüche 1 bis 6, wobei die Leistungsumwandlungsschaltung zwei DC/DC-Umwandlungsschaltungen (103) der zweiten Ebene umfasst.

8. Leistungsumwandlungsschaltung nach einem der Ansprüche 1 bis 7, wobei die externe Einrichtung (200) eine Gleichstromquelle, eine Last oder ein Energiespeicherumwandler ist.

9. Energiespeichervorrichtung, umfassend:
die Leistungsumwandlungsschaltung nach einem der Ansprüche 1 bis 8; und
eine Batterie (300).

10. Energiespeichervorrichtung nach Anspruch 9, wobei die Steuerung ferner zu Folgendem konfiguriert ist: wenn die Spannung der Batterie (300) kleiner als der erste Spannungsschwellenwert ist oder wenn die Spannung der Batterie (300) größer als der zweite Spannungsschwellenwert ist, Anpassen eines PWM-Signals der DC/DC-Umwandlungsschaltung (101) der ersten Ebene, um Spannungswerte des ersten Kondensators (106) und des zweiten Kondensators (107) so zu verringern, dass sie kleiner als der dritte Spannungsschwellenwert sind.

11. Energiespeichervorrichtung nach Anspruch 10, wobei die Steuerung ferner zu Folgendem konfiguriert ist: vor dem Anpassen des PWM-Signals der DC/DC-Umwandlungsschaltung (101) der ersten Ebene, Steuern jeder DC/DC-Umwandlungsschaltung (103) der zweiten Ebene so, dass sie ihren Betrieb einstellt.

12. Energiespeichervorrichtung nach Anspruch 10 oder 11, wobei die Steuerung ferner zu Folgendem konfiguriert ist: nach dem Anpassen des PWM-Signals der DC/DC-Umwandlungsschaltung (101) der ersten Ebene, um die Spannungswerte des ersten Kondensators (106) und des zweiten Kondensators (107) so zu verringern, dass sie kleiner als der dritte Spannungsschwellenwert sind, Steuern der DC/DC-Umwandlungsschaltung (101) der ersten Ebene so, dass sie ihren Betrieb einstellt.

13. Energiespeichervorrichtung nach Anspruch 12, wobei die Steuerung zu Folgendem konfiguriert ist: nachdem die DC/DC-Umwandlungsschaltung (101) der ersten Ebene ihren Betrieb eingestellt hat, das Schaltmodul (102) so zu steuern, dass es aus- oder eingeschaltet wird, so dass die Vielzahl von DC/DC-Umwandlungsschaltungen (103) der zweiten Ebene in Reihe oder parallel geschaltet wird.

14. Energiespeichersystem, wobei das Energiespeichersystem die Energiespeichervorrichtung nach einem der Ansprüche 9 bis 13 und einen Energiespeicherumwandler umfasst und die Energiespeichervorrichtung mit dem Energiespeicherumwandler verbunden ist; und
der Energiespeicherumwandler dazu konfiguriert ist, durch die Energiespeichervorrichtung ausgegebene Gleichstromenergie in Wechselstromenergie umzuwandeln und die Wechselstromenergie an ein Stromnetz oder eine Last auszugeben, und/oder der Energiespeicherumwandler dazu konfiguriert ist, durch das Stromnetz ausgegebene Wechselstromenergie in Gleichstromenergie umzuwandeln und die Gleichstromenergie an die Energiespeichervorrichtung auszugeben.

## Revendications

1. Circuit de conversion de puissance, dans lequel le circuit de conversion de puissance comprend un dispositif de commande, un circuit de conversion CC/CC de premier niveau (101), une pluralité de circuits de conversion CC/CC de second niveau (103), et un module de commutation (102) ; une première extrémité du circuit de conversion CC/CC de premier niveau (101) est configurée pour se connecter à un dispositif externe (200), et une seconde extrémité du circuit de conversion CC/CC de premier niveau (101) est connectée à une première extrémité du module de commutation (102) ; et une première extrémité de chaque circuit de conversion CC/CC de second niveau (103) est connectée à une seconde extrémité du module de commutation (102), et une seconde extrémité de chaque circuit de conversion CC/CC de second niveau (103) est configurée pour se connecter à une batterie (300) ;
un premier condensateur (106) est connecté en parallèle au circuit de conversion CC/CC de premier niveau (101) à la seconde extrémité du circuit de conversion CC/CC de premier niveau de manière à stabiliser une tension de la seconde extrémité du circuit de conversion CC/CC de premier niveau ;
un second condensateur (107) est connecté en parallèle à chaque circuit de conversion CC/CC de second niveau (103) à la première extrémité du circuit de conversion CC/CC de second niveau (103) de manière à stabiliser une tension de la première extrémité du circuit de conversion CC/CC de second niveau ; et
le dispositif de commande est configuré pour : lorsqu'une tension de la batterie (300) est inférieure à un premier seuil de tension et que des valeurs de tension du premier condensateur (106) et du second condensateur (107) sont inférieures à un troisième seuil de tension, commander l'activation ou la désactivation du module de commutation (102), de sorte que la pluralité de circuits de conversion CC/CC de second niveau (103) sont connectés en série du côté de leur première extrémité ; ou
lorsque la tension de la batterie (300) est supérieure à un deuxième seuil de tension et que les valeurs de tension du premier condensateur (106) et du second condensateur (107) sont inférieures au troisième seuil de tension, commander l'activation ou la désactivation du module de commutation (102), de sorte que la pluralité de circuits de conversion CC/CC de second niveau (103) sont connectés en parallèle ;
dans lequel le circuit de conversion de puissance comprend également un circuit de détection, et le circuit de détection est configuré pour détecter la valeur de tension de la batterie (300) et les valeurs de tension du premier condensateur (106) et du second condensateur (107).

2. Circuit de conversion de puissance selon la revendication 1, dans lequel le dispositif de commande est également configuré pour : lorsque la tension de la batterie (300) est inférieure au premier seuil de tension ou lorsque la tension de la batterie (300) est supérieure au deuxième seuil de tension, ajuster un signal PWM du circuit de conversion CC/CC de premier niveau (101) pour réduire les valeurs de tension du premier condensateur (106) et du second condensateur (107) pour qu'elles soient inférieures au troisième seuil de tension.

3. Circuit de conversion de puissance selon la revendication 2, dans lequel le dispositif de commande est également configuré pour : avant l'ajustement du signal PWM du circuit de conversion CC/CC de premier niveau (101), commander chaque circuit de conversion CC/CC de second niveau (103) pour qu'il arrête de fonctionner.

4. Circuit de conversion de puissance selon la revendication 2 ou 3, dans lequel le dispositif de commande est également configuré pour : après l'ajustement du signal PWM du circuit de conversion CC/CC de premier niveau (101) pour réduire les valeurs de tension du premier condensateur (106) et du second condensateur (107) pour qu'elles soient inférieures au troisième seuil de tension, commander le circuit de conversion CC/CC de premier niveau (101) pour qu'il arrête de fonctionner.

5. Circuit de conversion de puissance selon la revendication 4, dans lequel le dispositif de commande est configuré pour : après que le circuit de conversion CC/CC de premier niveau (101) arrête de fonctionner, commander l'activation ou la désactivation du module de commutation (102), de sorte que la pluralité de circuits de conversion CC/CC de second niveau (103) sont connectés en série ou en parallèle.

6. Circuit de conversion de puissance selon l'une quelconque des revendications 1 à 5, dans lequel
le circuit de conversion CC/CC de premier niveau (101) est configuré pour réduire une tension d'un premier port du circuit de conversion CC/CC de premier niveau (101), et le circuit de conversion CC/CC de second niveau (103) est configuré pour réduire une tension d'un premier port du circuit de conversion CC/CC de second niveau (103) à une tension de charge requise par la batterie (300) ; ou
le circuit de conversion CC/CC de second niveau (103) est configuré pour amplifier une tension d'un second port du circuit de conversion CC/CC de second niveau (103), et le circuit de conversion CC/CC de premier niveau (101) est configuré pour amplifier une tension d'un second port du circuit de conversion CC/CC de premier niveau (101) et émettre la tension amplifiée au dispositif externe (200) par l'intermédiaire de la première extrémité du circuit de conversion CC/CC de premier niveau (101).

7. Circuit de conversion de puissance selon l'une quelconque des revendications 1 à 6, dans lequel le circuit de conversion de puissance comprend deux circuits de conversion CC/CC de second niveau (103).

8. Circuit de conversion de puissance selon l'une quelconque des revendications 1 à 7, dans lequel le dispositif externe (200) est une source de courant continu, une charge, ou un convertisseur de stockage d'énergie.

9. Appareil de stockage d'énergie comprenant :
le circuit de conversion de puissance selon l'une quelconque des revendications 1 à 8 ; et,
une batterie (300).

10. Appareil de stockage d'énergie selon la revendication 9, dans lequel le dispositif de commande est également configuré pour : lorsque la tension de la batterie (300) est inférieure au premier seuil de tension ou lorsque la tension de la batterie (300) est supérieure au deuxième seuil de tension, ajuster un signal PWM du circuit de conversion CC/CC de premier niveau (101) pour réduire des valeurs de tension du premier condensateur (106) et du second condensateur (107) pour qu'elles soient inférieures au troisième seuil de tension.

11. Appareil de stockage d'énergie selon la revendication 10, dans lequel le dispositif de commande est également configuré pour : avant l'ajustement du signal PWM du circuit de conversion CC/CC de premier niveau (101), commander chaque circuit de conversion CC/CC de second niveau (103) pour qu'il arrête de fonctionner.

12. Appareil de stockage d'énergie selon la revendication 10 ou 11, dans lequel le dispositif de commande est également configuré pour : après l'ajustement du signal PWM du circuit de conversion CC/CC de premier niveau (101) pour réduire les valeurs de tension du premier condensateur (106) et du second condensateur (107) pour qu'elles soient inférieures au troisième seuil de tension, commander le circuit de conversion CC/CC de premier niveau (101) pour qu'il arrête de fonctionner.

13. Appareil de stockage d'énergie selon la revendication 12, dans lequel le dispositif de commande est configuré pour : après que le circuit de conversion CC/CC de premier niveau (101) arrête de fonctionner, commander l'activation ou la désactivation du module de commutation (102), de sorte que la pluralité de circuits de conversion CC/CC de second niveau (103) sont connectés en série ou en parallèle.

14. Système de stockage d'énergie, dans lequel le système de stockage d'énergie comprend l'appareil de stockage d'énergie selon l'une quelconque des revendications 9 à 13 et un convertisseur de stockage d'énergie, et l'appareil de stockage d'énergie est connecté au convertisseur de stockage d'énergie ; et
le convertisseur de stockage d'énergie est configuré pour convertir l'énergie de courant continu émise par l'appareil de stockage d'énergie en énergie de courant alternatif et émettre l'énergie de courant alternatif à un réseau électrique ou à une charge, et/ou le convertisseur de stockage d'énergie est configuré pour convertir l'énergie de courant alternatif émise par le réseau électrique en énergie de courant continu et émettre l'énergie de courant continu à l'appareil de stockage d'énergie.
